# EUROPEAN PATENT SPECIFICATION

(11) **EP 3 608 183 B1**
(45) Date of publication and mention of the grant of the patent: **24.03.2021**
(21) Application number: 19189833.7
(22) Date of filing: 02.08.2019
(51) Int. Cl.: B60T 11/30, B60T 17/22

(54) **AN ADAPTER FOR AN INTEGRATED UNIT WITH A BLEED VALVE, A TEMPERATURE SENSOR AND A PRESSURE SENSOR FOR A BRAKE CALIPER**
ADAPTER FÜR EINE EINHEIT BESTEHEND AUS ABLASSVENTIL, TEMPERATUR-UND DRUCKSENSOR FÜR EINEN BREMSSATTEL
ADAPTEUR POUR UNITÉ INTEGRÉE CONSTITUÉE PAR SOUPAPE DE DÉCHARGE, CAPTEUR DE TEMPERATURE ET CAPTEUR DE PRESSION POUR UN ÉTRIER DE FREIN

(30) Priority: 06.08.2018 IT 201800007883
(43) Date of publication of application: 12.02.2020
(73) Proprietor: MASERATI S.p.A., 41121 Modena (IT)
(72) Inventor: ALLIFUOCO, Roberto, I-10141 TORINO (IT); ARTUSO, Demetrio, I-40126 BOLOGNA (IT)
(74) Representative: Fioravanti, Corrado

(56) References cited:
- WO-A1-2004/011819
- GB-A- 2 457 473
- US-A- 5 964 326
- US-A1- 2004 074 722
- US-A1- 2006 192 426

## Description

The present invention concerns an adapter for an integrated unit with a bleed valve, a temperature sensor and a pressure sensor for a brake caliper.

### Prior art

As is well known, during the development and testing operations of the brakes of a new motor vehicle, it is necessary to measure the temperature and pressure of the brake fluid. The braking system, and in particular the brake fluid circuit, must in effect be sized in such a way that the temperature of the brake fluid never reaches, even in particularly severe conditions, the maximum allowable temperature, beyond which the fluid vaporizes. Being compressible, gaseous substances such as fluid vapors and air that may be trapped in the brake fluid do not allow the pressure required for applying the brakes to be transmitted.

Currently, the brake fluid temperature of a vehicle braking system is measured by means of a thermocouple applied in a threaded seat with a conical end provided in an upper part of the brake caliper. In normal vehicle use, the threaded seat houses a hollow bleed screw. The bleed screw is penetrated by a central channel that serves to remove air bubbles from the brake fluid. In the test phase, the thermocouple is mounted in the threaded seat for the bleed screw by means of a threaded fastening element with a conical end of a shape and size corresponding to that of the bleed screw.

Whenever the hydraulic circuit of the braking system is opened, a bleed is required before closing the circuit.

To apply the thermocouple, the bleed screw must first be removed from its seat in the brake caliper, then a first bleed step is carried out, then the thermocouple is applied and the threaded fastener that carries the thermocouple is tightened. Once the test has been completed and the temperature has been measured, the thermocouple must be removed, a second bleed operation must be carried out, and the bleed screw must be remounted on the brake caliper.

To measure the brake fluid pressure, a pressure sensor is currently applied upstream of the brake caliper, at an intermediate point of the braking system interposed between a rigid supply tube and a flexible tube that brings the brake fluid to the caliper. In this intermediate position, a T-connector (three-way) is introduced, which allows the passage of the brake fluid and also allows a pressure transducer to be connected. Therefore, to apply the pressure transducer, the hydraulic circuit is opened again, causing the introduction of considerable quantities of air into the braking circuit. Part of the air entering the circuit migrates through the flexible tube towards the brake caliper; another part of the air entering the circuit rises through the rigid tube towards the hydraulic control unit, which is located in the engine compartment in a higher position than the brake caliper and at the point where the connection for the pressure sensor is inserted.

Each bleed procedure requires a certain number of bleed cycles to completely remove the air. It is necessary to carry out several subsequent bleed cycles and wait each time for the air bubbles dispersed inside the tubes to recompose after each bleed cycle to form larger air bubbles, which are easier to expel.

The bleed operations described above must be repeated for each wheel of the vehicle and require the intervention of two operators, one to work the bleed valve, the other to depress the brake pedal from inside the motor vehicle US 2004/0074722 A1 relates to a method for filling a vehicle braking hydraulic device. In this document part P can be considered as the claimed appendix. In this known configuration the appendix is not provided with an external thread and there is no element corresponding to the first seat in fluid communication with the internal cavity and having an internal thread configured to receive at least one temperature and/or pressure transducer, as in the present invention.

### Summary of the invention

A general object of the present invention is to overcome the aforementioned inconveniences by measuring the temperature and pressure of the brake fluid in a simpler and more expeditious way. Another object is to avoid or at least drastically reduce the introduction of air into the circuit of the braking system.

The aforesaid and other objects and advantages, which will be better understood hereinafter, are achieved according to an aspect of the present invention, by an adapter having the features defined in claim 1. Preferred embodiments of the adapter are defined in the dependent claims. According to another aspect, the invention proposes to implement a method as defined in claim 8.

The present invention proposes to make an adapter for an integrated unit with bleed valve, temperature sensor and pressure sensor for a brake caliper; the adapter allows both for bleeding the brake fluid and for measuring its temperature and pressure without having to disconnect the conduits of the hydraulic circuit of the braking system.

In summary, an adapter has a hollow body, which forms an internal cavity, and a connecting appendage, which has an external thread and an internal passage. This passage opens at one end of the connecting appendage and is in fluid communication with the internal cavity. Two threaded seats are formed in the hollow body, both open externally and both in fluid communication with the internal cavity. A first threaded seat is configured to receive at least one temperature and/or pressure transducer. A second seat is configured to receive a bleed screw and has a conical end connection surface tapering towards and communicating with the internal cavity.

### Brief description of the drawings

The features and advantages of the present invention will become clearer from the detailed description that follows, provided purely by way of non-limiting example. Reference is made to the accompanying drawings, wherein:
Figure 1 is a side view of an adapter according to an embodiment of the invention;
Figure 2 is a longitudinal sectional view of the adapter along the line II-II in Figure 1;
Figures 3 and 4 are respective views of the two opposite ends of the adapter in Figure 1;
Figure 5 is a side view of a bleed screw applicable to the adapter of Figure 1;
Figure 6 is a longitudinal sectional view of the bleed screw along the line VI-VI in Figure 5;
Figure 7 is a longitudinal sectional view of an alternative embodiment of the adapter to that of Figure 2;
Figure 8 is a partial perspective view of a brake caliper; and
Figure 9 is a schematic view of the adapter with a bleed screw and transducer mounted.

### Detailed description

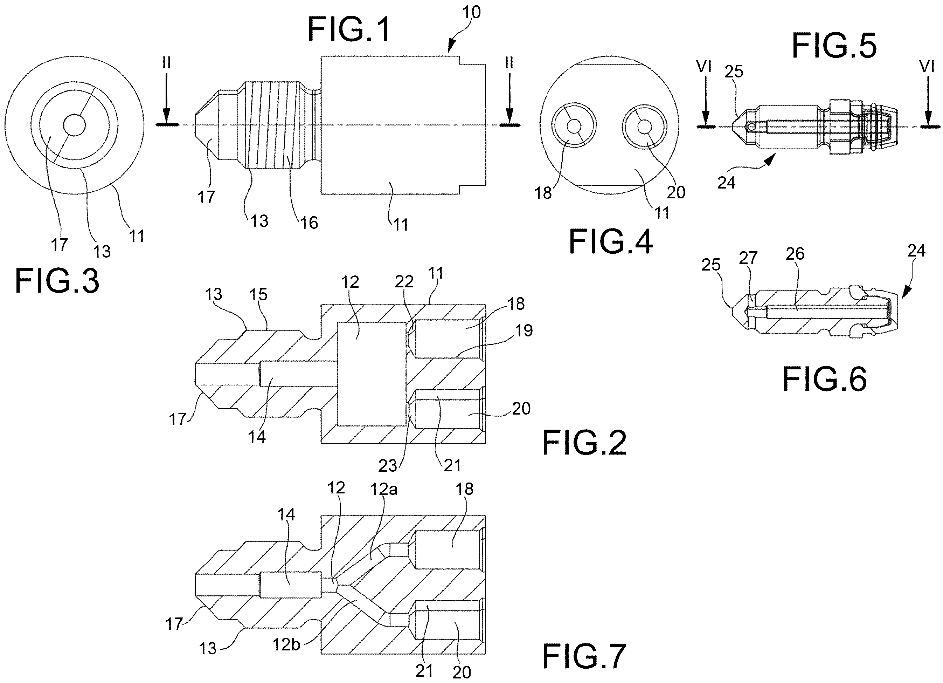

With reference initially to figures 1 to 4, an adapter, indicated collectively at number 10, comprises a hollow body 11 that forms an internal cavity 12. The hollow body 11 is made of rigid material, preferably of metallic material. For example, the hollow body 11 may be made of aluminum or aluminum alloys, which may withstand temperature peaks (800°C-1000°C) due to the proximity of the brake disc.

The hollow body 11 forms a connecting appendage 13 penetrated by an internal passage 14 that opens externally and is in fluid communication with the internal cavity 12 of the hollow body 11.

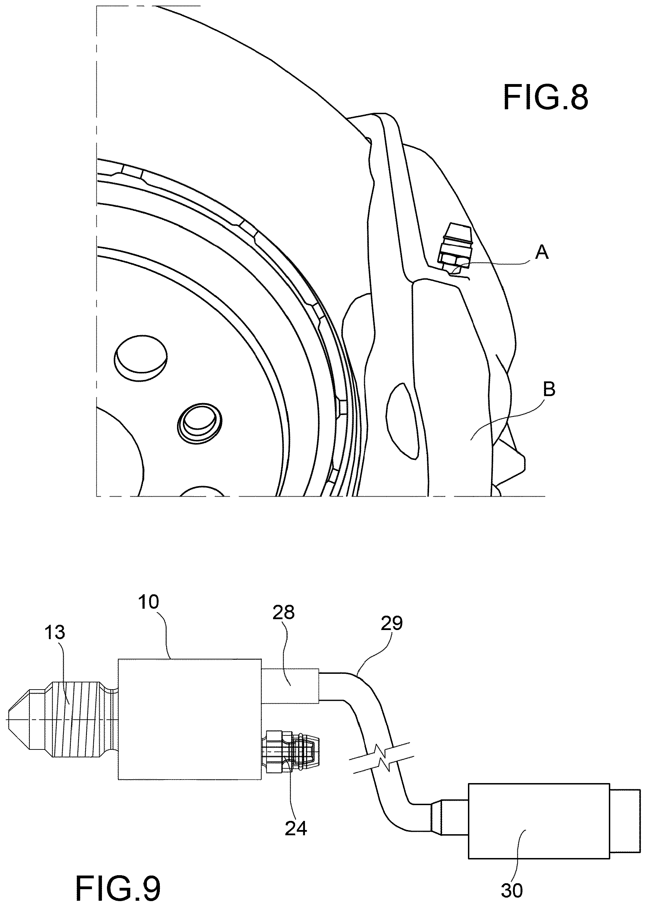

The connecting appendage 13 has a cylindrical portion 15 with an external thread 16, which allows screwing into a corresponding threaded bleed seat A formed in the body B of a brake caliper (Figure 8), to which the adapter is to be mounted. The threaded bleed seat A of the brake caliper is the seat into which a traditional bleed screw may be screwed. During normal use of the vehicle, the bleed seat A is closed by a threaded plug (not shown).

The connecting appendage 13 may have a conical end portion 17, as in the embodiment illustrated, corresponding to a traditional conical surface in the bleed seat A of the brake caliper.

The connecting appendage 13 allows the adapter to be mounted in the bleed seat A of the brake caliper. In the installed condition, the internal passage 14 allows the brake fluid from the body B of the brake caliper to be introduced into the cavity 12 of the adapter.

The body 11 of the adapter forms at least two cylindrical seats with respective internal threads: a first cylindrical seat 18 with an internal thread 19 and a second cylindrical seat 20 with an internal thread 21. Both seats 18 and 20 open to the outside and are in fluid communication with the internal cavity 12.

At least one of the seats 18, 20 has a respective conical end connection surface 22, 23, tapered towards the cavity 12 and communicating therewith.

The first seat 18 is configured to receive a bleed screw 24 (Figures 5 and 6) suitable to allow the removal of air and vapor bubbles from the brake fluid contained in the cavity 12 and originating from the hydraulic circuit that activates the brake caliper.

The bleed screw 24 has a structure that does not differ significantly from a traditional bleed screw and has a conical end 25 coupled with or corresponding to the conical end connection portion 20 of the seat 18. According to a configuration known per se, the bleed screw 24 may have a longitudinal channel 26 which opens at one end of the screw intended in use to be turned outwards, and a transverse channel 27 which opens near the conical end 25 and communicates with the longitudinal channel 25.

The outer part of the bleed screw 24 may be miniaturized for reasons of space so that it does not protrude appreciably from the adapter when mounted thereto.

The second threaded seat 20 is configured to receive a pressure transducer 28 with integrated temperature sensor to measure the temperature and pressure of the brake fluid introduced into the cavity 12. The integrated transducer 28 is known in the art and does not need to be described in detail here. For example, an integrated transducer sold by Kulite Semiconductor Products, Inc. may be installed.

The transducer 28 may be connected electrically, by means of a cable 29, to a connector 30 containing the electronics for power supply and management of the temperature and pressure sensors. The connector 30 is preferably fitted in the wheel arch of the motor vehicle, where the operating temperatures are lower than in the brake area.

When the adapter 10 is mounted on the brake caliper, the connecting appendage is turned downwards and inserted into the bleed seat A, while the threaded seats 18, 20 are turned upwards.

The seats 18, 20 may be identical in shape and size, which allows the integrated transducer or the bleed valve to be mounted indifferently in either seat 18, 20.

The measurement and bleed operations may be carried out as follows. First of all, the external closure plug, which normally closes the circuit, is removed from the seat A of the brake caliper. Then the connecting appendage 13 of the adapter is screwed into the seat A of the caliper. An integrated pressure-temperature transducer 28 is mounted in the first threaded seat 18 of the adapter. A bleed screw 24 is mounted in the second seat 20. The connector 30 is applied and connected electrically to an electronic control unit (not shown), conveniently located in a not excessively hot area of the vehicle to be tested, typically in the wheel arch. The air in the circuit is then removed by acting on the bleed screw 24, which is then closed. The test may then be carried out by measuring the temperature and the pressure of the brake fluid through the transducer 28. After the measurements have been made, the connector 30 is disconnected, and the adapter 10 is removed from the seat A of the brake caliper. A final bleed phase of the brake fluid is carried out; this bleed phase may be carried out by applying a traditional bleed screw in the seat A of the brake caliper, or the same bleed screw 24 unscrewed from the adapter 10.

As may be appreciated, due to the configuration described above, the pressure and temperature of the brake fluid in a braking system may be measured without disconnecting the conduits of the hydraulic circuit. Experimental tests carried out by the Applicant have shown that the use of an adapter as described above allows an overall reduction in the preparation and testing time of approximately 50%. It will be appreciated that the risk of air being introduced into the braking system and trapped therein is eliminated. Possible complications linked, according to the traditional art, to disconnecting the hydraulic circuit at a height from which any air bubbles introduced into the circuit tended to go up towards the hydraulic control unit of the vehicle, are eliminated. The small size of the adapter allows it to be mounted on virtually any brake caliper, without problems of interference with mechanical members close to the brake caliper.

According to one embodiment (Figure 2), the internal cavity 12 may be obtained as an internal chamber 12 communicating on one side with the internal passage 14 and communicating directly, on the other side, with the threaded seats 18, 20.

According to an alternative embodiment (Figure 7), the internal cavity 12 may be obtained in the form of a branched channel obtained within the body 11 of the adapter. The channel may comprise two conduits 12a, 12b that fork from the internal passage 14 and connect it respectively to the first 18 and the second seat 20.

According to a further alternative embodiment (not shown), the adapter may have two separate and distinct threaded seats instead of a single threaded seat for a single integrated temperature and pressure transducer. According to this variant, a first seat may be used to mount a pressure sensor and a second threaded seat may be used to mount a temperature sensor.

Different aspects and embodiments of the adapter and the measurement method have been described. The embodiments and the details of construction may vary widely with respect to those described and illustrated purely by way of non-limiting example, as long as the resulting configurations do not depart from the scope of the invention as defined in the accompanying claims.

## Claims

1. An adapter (10) for an integrated unit with a bleed valve, a temperature sensor and a pressure sensor for a brake caliper, the adapter comprising:
- a hollow body (11), which forms an internal cavity (12);
- a connecting appendage (13) having an external thread (16) and an internal passage (14) which opens on one end of the connecting appendage and is in fluid communication with the internal cavity (12);
- at least a first seat (18) in fluid communication with the internal cavity (12) and having an internal thread (19) configured to receive at least one temperature and/or pressure transducer (28);
- at least a second seat (20) in fluid communication with the internal cavity (12), wherein the second seat (20) has an internal thread (21) which is configured to receive a bleed screw (24), and a conical end connection surface (23) tapering towards and communicating with the internal cavity (12).

2. An adapter according to claim 1, wherein the connecting appendage (13) has a cylindrical portion (15) providing the external thread (16), and a conical end portion (17).

3. An adapter according to claim 1 or 2, wherein also the first seat (18) has a conical end connection surface (22) tapering towards and communicating with the internal cavity (12).

4. An adapter according to claim 3, wherein the seats (18, 20) have a same shape and size.

5. An adapter according to any one of the preceding claims, wherein the internal cavity (12) is shaped as a chamber (12) communicating on one side with the internal passage (14) and communicating directly, on the other side, with both threaded seats (18, 20).

6. An adapter according to any one of claims 1 to 4, wherein the internal cavity (12) is shaped as a channel comprising two conduits (12a, 12b) which bifurcate from the internal passage (14) and connect the internal passage to the first seat (18) and the second seat (20), respectively.

7. An adapter according to any one of the preceding claims, wherein the adapter has a further, third threaded seat, distinct and separate from the first and second threaded seats (18, 20), the third threaded seat being in fluid communication with the internal cavity (12) and having an internal thread configured to receive a temperature or pressure sensor.

8. A method of measuring the temperature and pressure of the brake fluid in a braking system of a motor vehicle, the method comprising the steps of:
providing an adapter (10) according to any one of the preceding claims,
applying the adapter (10) to a brake caliper of a motor vehicle by screwing the threaded connecting appendage (13) into a threaded bleed seat (A) formed in the body (B) of the brake caliper,
mounting an integrated pressure-temperature transducer (28) in the first threaded seat (18) of the adapter,
mounting a bleed screw (24) in the second threaded seat (20),
connecting electrically the transducer (28) to an electronic control unit of the motor vehicle, located in a remote position with respect to the brake caliper, by means of a connector (30) electrically connected to the transducer (28) through a cable (29),
removing air and vapor from the brake fluid of the hydraulic circuit of the braking system by means of the bleed screw (24), and then closing the hydraulic circuit of the braking system by acting on the bleed screw (24),
measuring the temperature and pressure of the brake fluid by means of the transducer (28),
disconnecting the connector (30) from the electronic control unit of the vehicle,
removing the adapter (10) from the bleed seat (A) of the brake caliper,
performing a final bleed phase by mounting a bleed screw into the bleed seat (A), and
closing the bleed seat (A) by means of a threaded closure plug.

## Patentansprüche

1. Adapter (10) für eine integrierte Einheit mit einem Entlüftungsventil, einem TemperaturSensor und einem Druck-Sensor für einen Bremssattel, wobei der Adapter umfasst:
einen Hohlkörper (11), der einen inneren Hohlraum (12) bildet;
einen Verbindungsansatz (13) mit einem Außengewinde (16) und einem inneren Durchlass (14), der sich an einem Ende des Verbindungsansatzes öffnet und in Fluidverbindung mit dem inneren Hohlraum (12) steht;
wenigstens eine erste Aufnahme (18), die in Fluidverbindung mit dem inneren Hohlraum (12) steht und ein Innengewinde (19) aufweist, das so ausgeführt ist, dass es wenigstens einen Temperatur- und/oder Druckmesswandler (28) aufnimmt;
wenigstens eine zweite Aufnahme (20), die in Fluidverbindung mit dem inneren Hohlraum (12) steht, wobei die zweite Aufnahme (20) ein Innengewinde (21), das zum Aufnehmen einer Entlüftungsschraube (24) ausgeführt ist, sowie eine konische Endverbindungsfläche (23) aufweist, die sich zu dem inneren Hohlraum (12) hin verjüngt und mit ihm in Verbindung steht.

2. Adapter nach Anspruch 1, wobei der Verbindungsansatz (13) einen zylindrischen Abschnitt (15), an dem sich das Außengewinde (16) befindet, und einen konischen Endabschnitt (17) aufweist.

3. Adapter nach Anspruch 1 oder 2, wobei auch die erste Aufnahme (18) eine konische Endverbindungsfläche (22) aufweist, die sich zu dem inneren Hohlraum (12) hin verjüngt und mit ihm in Verbindung steht.

4. Adapter nach Anspruch 3, wobei die Aufnahmen (18, 20) gleiche Form und Größe haben.

5. Adapter nach einem der vorangehenden Ansprüche, wobei der innere Hohlraum (12) als eine Kammer (12) geformt ist, die an einer Seite mit dem inneren Durchlass (14) in Verbindung steht und an der anderen Seite direkt mit beiden Gewindeaufnahmen (18, 20) in Verbindung steht.

6. Adapter nach einem der Ansprüche 1 bis 4, wobei der innere Hohlraum (12) als ein Kanal geformt ist, der zwei Stränge (12a, 12b) umfasst, die von dem inneren Durchlass (14) abzweigen und den inneren Durchlass mit der ersten Aufnahme (18) bzw. der zweiten Aufnahme (20) verbinden.

7. Adapter nach einem der vorangehenden Ansprüche, wobei der Adapter eine weitere, dritte Gewindeaufnahme aufweist, die sich von der ersten und der zweiten Gewindeaufnahme (18, 20) unterscheidet und getrennt ist, wobei die dritte Gewindeaufnahme in Fluidverbindung mit dem inneren Hohlraum (12) steht und ein Innengewinde aufweist, das zum Aufnehmen eines Temperatur- oder Druck-Sensors ausgeführt ist.

8. Verfahren zum Messen der Temperatur und des Drucks der Bremsflüssigkeit in einem Bremssystem eines Kraftfahrzeugs, wobei das Verfahren die folgenden Schritte umfasst:
Bereitstellen eines Adapters (10) nach einem der vorangehenden Ansprüche,
Anbringen des Adapters (10) an einem Bremssattel eines Kraftfahrzeugs durch Einschrauben des mit Gewinde versehenen Verbindungsansatzes (13) in eine mit Gewinde versehene Entlüftungsaufnahme (A), die in dem Körper (B) des Bremssattels ausgebildet ist,
Montieren eines integrierten Druck-Temperatur-Wandlers (28) in der ersten Gewindeaufnahme (18) des Adapters,
Montieren einer Entlüftungsschraube (24) in der zweiten Gewindeaufnahme (20),
elektrisches Verbinden des Wandlers (28) mit einer elektronischen Steuerungseinheit des Kraftfahrzeugs, die sich an einer in Bezug auf den Bremssattel entfernten Position befindet, mittels eines Verbinders (30), der über ein Kabel (29) elektrisch mit dem Wandler (28) verbunden ist,
Entfernen von Luft und Dampf aus der Bremsflüssigkeit des Hydraulikkreislaufs des Bremssystems mittels der Entlüftungsschraube (24) und danach Schließen des Hydraulikkreislaufs des Bremssystems durch Einwirken auf die Entlüftungsschraube (24),
Messen der Temperatur und des Drucks der Bremsflüssigkeit mittels des Wandlers (28),
Trennen des Verbinders (30) von der elektronischen Steuerungseinheit des Fahrzeugs,
Entfernen des Adapters (10) aus der Entlüftungsaufnahme (A) des Bremssattels,
Durchführen einer abschließenden Entlüftungsphase durch Montieren einer Entlüftungsschraube in der Entlüftungsaufnahme (A),
sowie
Schließen der Entlüftungsaufnahme (A) mittels eines mit Gewinde versehenen Verschlussstopfens.

## Revendications

1. Adaptateur (10) pour unité intégrée, comportant une soupape de purge, un capteur de température et un capteur de pression, pour un étrier de frein, l'adaptateur comprenant :
- un corps creux (11), qui forme une cavité interne (12) ;
- un appendice de connexion (13) ayant un filetage externe (16) et un passage interne (14) qui s'ouvre sur une extrémité de l'appendice de connexion et se trouve en communication fluidique avec la cavité interne (12) ;
- au moins un premier siège (18) en communication fluidique avec la cavité interne (12) et ayant un filetage interne (19), configuré pour recevoir au moins un transducteur de température et/ou de pression (28) ;
- au moins un deuxième siège (20) en communication fluidique avec la cavité interne (12), le deuxième siège (20) ayant un filetage interne (21) qui est configuré pour recevoir une vis de purge (24), et une surface de connexion terminale conique (23) s'effilant vers et communiquant avec la cavité interne (12).

2. Adaptateur selon la revendication 1, dans lequel l'appendice de connexion (13) a une portion cylindrique (15) fournissant le filetage externe (16), et une portion terminale conique (17).

3. Adaptateur selon la revendication 1 ou 2, dans lequel le premier siège (18) a également une surface de connexion terminale conique (22) s'effilant vers et communiquant avec la cavité interne (12).

4. Adaptateur selon la revendication 3, dans lequel les sièges (18, 20) ont une forme et une taille identiques.

5. Adaptateur selon l'une quelconque des revendications précédentes, dans lequel la cavité interne (12) se présente sous forme de chambre (12) communiquant d'un côté avec le passage interne (14) et communiquant directement, de l'autre côté, avec les deux sièges filetés (18, 20).

6. Adaptateur selon l'une quelconque des revendications 1 à 4, dans lequel la cavité interne (12) se présente sous forme de canal comprenant deux conduites (12a, 12b) qui bifurquent depuis le passage interne (14) et connectent le passage interne au premier siège (18) et au deuxième siège (20), respectivement.

7. Adaptateur selon l'une quelconque des revendications précédentes, dans lequel l'adaptateur a en outre un troisième siège fileté, distinct et séparé des premier et second sièges filetés (18, 20), le troisième siège fileté étant en communication fluidique avec la cavité interne (12) et ayant un filetage interne configuré pour recevoir un capteur de température ou de pression.

8. Procédé de mesure de la température et de la pression d'un liquide de frein dans un système de freinage d'un véhicule à moteur, le procédé comprenant les étapes de :
fourniture d'un adaptateur (10) selon l'une quelconque des revendications précédentes,
application de l'adaptateur (10) à un étrier de frein d'un véhicule à moteur par vissage de l'appendice de connexion fileté (13) dans un siège de purge fileté (A) formé dans le corps (B) de l'étrier de frein,
montage d'un transducteur de pression-température intégré (28) dans le premier siège fileté (18) de l'adaptateur,
montage d'une vis de purge (24) dans le deuxième siège fileté (20),
connexion électrique du transducteur (28) à une unité de commande électronique du véhicule à moteur, située en une position distante par rapport à l'étrier de frein, au moyen d'un connecteur (30) connecté électriquement au transducteur (28) par l'intermédiaire d'un câble (29),
retrait d'air et de vapeur du liquide de frein du circuit hydraulique du système de freinage au moyen de la vis de purge (24), puis fermeture du circuit hydraulique du système de freinage par action sur la vis de purge (24),
mesure de la température et de la pression du liquide de frein au moyen du transducteur (28),
déconnexion du connecteur (30) de l'unité de commande électronique du véhicule,
retrait de l'adaptateur (10) du siège de purge (A) de l'étrier de frein,
mise en œuvre d'une phase de purge finale par le montage d'une vis de purge dans le siège de purge (A), et
fermeture du siège de purge (A) au moyen d'un bouchon de fermeture fileté.
